(19) Europäisches Patentamt
European Patent Office
Office européen des brevets

(11) Publication number: **0 078 299**
**B1**

(12) **EUROPEAN PATENT SPECIFICATION**

(45) Date of publication of patent specification: **30.10.85**

(51) Int. Cl.$^4$: **G 01 N 7/18**

(21) Application number: **82901559.3**

(22) Date of filing: **11.05.82**

(86) International application number:
**PCT/SE82/00163**

(87) International publication number:
**WO 82/04128 25.11.82 Gazette 82/28**

# (54) METHOD AND DEVICE FOR DETERMINING THE NITROGEN CONTENT IN AMMONIUM NITROGEN CONTAINING MATERIALS.

(30) Priority: **11.05.81 SE 8102921**
**13.04.82 SE 8202312**

(43) Date of publication of application:
**11.05.83 Bulletin 83/19**

(45) Publication of the grant of the patent:
**30.10.85 Bulletin 85/44**

(84) Designated Contracting States:
**AT BE CH DE FR GB LI LU NL SE**

(56) References cited:
**DE-B-2 519 895**
**DE-C- 841 960**
**US-A-3 718 433**

**Archiv für Pflanzenbau 3 (1930), S TOVBORG JENSEN, "Untersuchungen über Ammoniakentbindung und Stickstoffverluste bei der Düngung mit Jauche", p. 161-180**
**Chemical Abstracts, vol. 85 (1976), abstract No. 92737b, Vses. Nauchno-Issled. Inst. Udobr. Agropochvoved. Moscow, USSR. Agrokhimiya 1976, (6), 108-11 (Russ).**

(73) Proprietor: **ENGLUND, Claes Anders**
**Kronasen L 41**
**S-752 51 Uppsala (SE)**
(73) Proprietor: **JOHANSSON, Lars-Erik Gustav**
**Österby Gard**
**S-730 73 Ransta (SE)**

(72) Inventor: **ENGLUND, Claes Anders**
**Kronasen L 41**
**S-752 51 Uppsala (SE)**
Inventor: **JOHANSSON, Lars-Erik Gustav**
**Österby Gard**
**S-730 73 Ransta (SE)**

(74) Representative: **Widén, Björn et al**
**Uppsala Patentbyra Box 9039**
**S-750 09 Uppsala (SE)**

EP 0 078 299 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a method and a device for simple and field determination of the content of ammonium nitrogen and urea nitrogen primarily in various natural manures of animal origin and particularly liquid manure. The method and the device of the invention may, however, also be used for determining the nitrogen content in such materials as digested sludge, compost, topsoil, etc.

The price trend for fertilizers in recent years has caused an increasing interest in the utilization of the plant nutrient contents of farmyard manure, and especially nitrogen, phosphorus and potassium. Potassium and phosphorus are bound in the ground, while the nitrogen nitrified by the soil bacteria is soluble and is easily leached. When spreading liquid manure in the autumn most of the nitrogen is likely to disappear and it must therefore be fully compensated for with fertilizers in spring. Although the nitrogen supply to the soil may be dosed relatively exactly, the nitrogen resource of the farmyard manure is lost. If the farmyard manure is spread in late winter or spring a great part of the nitrogen content will, under suitable conditions, be available to the plants. This part is then possibly supplemented with fertilizer. The rate of the nitrogen supply to the soil, is, however, rather critical to the cultured plants. Too much nitrogen produces bigger and heavier plants having a loose tissue which fall and form so-called laid corn, while too little nitrogen gives a bad crop yield. A basic prerequisite for the utilization of the nitrogen of farmyard manure is therefore to know the nitrogen content thereof.

In addition to the fact that the nitrogen content of farmyard manure may vary from farm to farm, it may also vary in time in the same farm due to, for example, dilution with melt water, evaporation or the microbial degradation process in the manure basin. For a successful result the farmyard manure should therefore be analyzed on each spreading occasion. Such analysis of the manure is today performed to a very limited extent, and in such a case by having manure samples analyzed in a chemical analytical laboratory. Since the sampling must take place some time before the spreading, the sample, on one hand, will have time to be microbially transformed in relation to the contents of the manure basin during the transport thereof to the laboratory, and, on the other hand, the nitrogen content of the manure will have time to change before the spreading occasion. Although reliable methods of analysis are known since a long time, these methods are complicated and may in practice only be performed in a laboratory.

In farmyard manure the nitrogen is primarily bonded, on one hand, organically in amino acids and proteins, and, on the other hand, in the form of ammonium ($NH_4^+$). It is the ammonium nitrogen that is nitrified by soil bacteria into nitrate, which is the form that is most easily taken up by the plants. In liquid manure ammonium nitrogen is between 50 and 90%, whereas manure having a higher content of dry matter, and solid manure contain 20% of this nitrogen form. Thus, it is the ammonium nitrogen that is of interest in the analysis.

A method of analysis that has been suggested recently for a more extensive analysis of the ammonium nitrogen content in liquid manure is based upon an about 50 years old method for the determination of nitrogen is urine described by Tovborg-Jensen, "Untersuchungen über Ammoniakentbindung und Stickstoffverluste bei der Düngung mit Jauche", Archiv für Pflanzenbau, *3*, 1930, page 161—180. In this method the ammonium nitrogen and possibly present urea nitrogen are oxidized into free nitrogen gas by a sodium hypobromite solution. The evolved gas is then determined volumetrically. The method has several disadvantages. The sodium hypobromite used as oxidizing agent is, in addition to being expensive, very volatile and emits bromine vapour. The liquid also contains lye which is highly caustic. At least the preparation of the oxidizing liquid requires cautiousness and should be performed in a so-called fume cupboard. Further, the volumetric gas measurement requires the use of a waterfilled reading tube and various cock connections. For the hitherto suggested apparatus it has also been necessary to filter the manure sample in order to remove the solid constituents before the introduction thereof into the reaction vessel. In summary, the above mentioned disadvantages make it seem difficult to develop an apparatus for this method that can be manufactured in series and used fieldwise in the farms. Nor has any such apparatus hitherto been produced.

DE—C—841 960 discloses an apparatus for volumetric determination of urea in blood and urine. It could, however, not be used for unfiltered manure and is not suitable for field-use.

DE—A—2 519 895 discloses a method and an apparatus for quantitatively determining the content of water in a mixture of liquids by reacting the mixture in a gas-tightly sealed container with a reagent capable of transferring the water into vapour and measuring the pressure of the evolved gas. The reagent is supplied in a cup floating on the liquid mixture. There is no disclosure of utilizing the apparatus for other purposes than water determination, nor would the apparatus for suitable for determining the nitrogen content of manure as the construction would not permit the necessary rapid addition of a large amount of oxidizing agent.

The object of the present invention is to provide an improved method for nitrogen determination which lacks the disadvantages of the prior art method, as well as a device therefore. Thus, one aspect of the invention relates to a method of determining the nitrogen of ammonium and urea containing materials such as manure, digested sludge, compost and soil, wherein a predetermined sample quantity of said material and an excess of an agent capable of oxidizing

ammonium and urea nitrogen into nitrogen gas are contacted in a gas-tightly sealed container and the amount of nitrogen gas evolution caused by the reaction of the material sample with the oxidizing agent is measured, said amount being directly related to the amount of ammonium and urea nitrogen of the material sample, characterized in that said oxidizing agent is selected from sodium hypochlorite, potassium hypochlorite, calcium hypochloride, chlorinated lime and mixtures thereof, and that said amount of evolved gas is measured by a pressure measuring device as a pressure rise within said container, said oxidizing agent and said sample being introduced separately into the container and, after sealing of the container being brought into contact with each other by external operation of the container.

The above method is thus based upon the same oxidation principle as the above described hypobromite method but differs essentially in two respects, viz. firstly by, instead of measuring the gas evolution volumetrically, determining the pressure increase generated by the nitrogen gas in a vessel of constant volume, and secondly, by using a considerably safer oxidizing agent than the sodium hypobromite used in the previous method. With the present method it will be possible to perform a nitrogen analysis on location, the result being directly readable on a pressure gauge, such as a manometer, since the pressure rise is directly related to the content of ammonium and urea nitrogen. As will be seen below the method may be carried out with a very simple apparatus, which with fully acceptable accuracy of measurement may be made very robust and manufactured in series, and the method may, in contrast to the previously used hypobromite method, readily be carried out by unskilled labour. The novel simplified method of the invention thus makes it possible to introduce nitrogen analysis as a standard procedure in farms, having liquid manure equipment, permitting sampling and analysis to take place in direct connection to the spreading of the manure. This in turn produces excellent prerequisites for a satisfactory utilization of the plant nutrient of the farmyard manure.

The oxidizing agents mentioned above only oxidize the ammonium and urea nitrogen of the manure into gaseous products, do not give an explosive reaction and are safe to handle. They may be used as solids or solutions. From a practical point of view sodium hypochlorite and calcium hypochlorite would be preferred. The former is commercially available as an approximately 12% solution, whereas calcium hypochlorite is the main constituent of chlorinated lime, which is commercialized in solid form. As will appear from the following the solid form may be preferred, since the size of the reagent vessel can then be reduced. The reaction between calcium hypochlorite and the ammonium nitrogen of the manure may be represented by the following reaction formula

$$3Ca(OCl)_2+4NH_4^++4OH^-\rightarrow 3CaCl_2+2N_2+10H_2O.$$

Since the reaction is carried out in a closed vessel the quantity of free nitrogen formed can thus be measured as a pressure rise with a manometer (or other pressure meter), graduated in, e.g. kilograms of $N/m^3$.

Another aspect of the invention thus relates to a device for determining the nitrogen content of ammonium and urea containing materials, such as manure, digested sludge, compost and soil, comprising a gas-tightly sealable first container having at least one opening for the introduction of a material sample and an oxidizing agent, and a pressure measuring device for measuring the pressure in the container, said container comprising at least partially separated or separable spaces for the material sample and oxidizing agent, respectively, arranged to be capable of keeping the two substances separated, but through operation of the sealed container from the outside thereof permit mixing of the substances with each other, characterized in that said space for the oxidizing agent is a second container which is rotatably journalled in said first container between a first position, where the oxidizing agent is retained therein, and a second position, where the oxidizing agent is emptied into said first container.

A simple and convenient embodiment of the above device thus consists of a can-shaped container having a gas-tightly attachable lid or cover provided with a manometer, and wherein the container for the oxidizing agent is journalled about a horizontal axis and arranged to be actuable from the outside of the reaction vessel, after the lid has been attached, such as by an operating arm connected via a lead-through in the vessel wall or by being arranged such that it can be brought to said second, emptying position simply by tipping or tilting the apparatus. In the latter case, it may, for example, be relatively freely journalled in the container, so that it in an upper position leans against the inner wall of the vessel and can be tipped to rotate downwards to hang with the opening towards the bottom of the vessel. Optionally means are provided for agitating the reaction mixture as well as suitable means for thermostatting the reaction vessel. For practical use, however, a sufficient accuracy of measurement would be obtained even without such thermostatting. Said optional agitating means may either be separate or combined with the oxidizing agent container, such that stirring is performed by turning the latter in the reaction vessel.

With such a device the method of the invention can practically be carried out by introducing a predetermined manure sample into the container, introducing an excess of oxidizing agent (in relation to the ammonium and urea nitrogen in the manure sample) into the oxidizing agent container and fastening the lid provided with the manometer. The oxidizing agent is then brought into contact with the manure sample in suitable

manner, the reaction mixture is agitated and, when the reaction is completed—which takes about 1 minute—the result of the analysis is read on the manometer.

The method is thus extremely simple to carry out and, even without thermostatting, gives an analysis result which is sufficiently accurate in relation to the accuracy obtained for the very sampling and the accuracy obtained for the subsequent spreading of the farmyard manure. A great advantage of the method of analysis according to the invention, wherein in contrast to the previous method no filtrate is used but a whole manure sample added, is that the nitrogen content is obtained related to the sample material including a gravel, straw, and sawdust which may be contained in the liquid manure.

The measuring apparatus of the invention can be made very simple and robust and easy to clean and is therefore excellently suited for use in the field. Further, it is completely safe to use, since the pressure rises operated with are not very great. A suitable pressure increase is, for example, of the order of 100 kPa.

As indicated above the analysis also comprises urea, which is not any disadvantage since the nitrogen in this form is quickly transformed into ammonium nitrogen. In most cases this will have taken place substantially completely already in the liquid manure container.

As mentioned above the method and the device of the invention are, of course, not restricted to the determination of the ammonium nitrogen content of liquid manure, but may as well, possibly with some modifications, be applied to liquid manure with a higher content of dry matter and solid manure, compost, topsoil, etc.

In the following the method and the device of the invention are further illustrated with respect to some particular embodiments, reference being made to the accompanying drawings, wherein

Figure 1 is a perspective view, with parts broken away, of an embodiment of a measuring device according to the invention.

Figure 2 is a schematic side elevation, partially in section, of the measuring device of Figure 1 without the lid and with the oxidizing agent container in a first position,

Figure 3 is a corresponding view to Figure 2 but with the lid attached and the oxidizing agent container in a second position,

Figure 4 is another embodiment of the measuring device according to the invention and

Figure 5 is a perspective view of an embodiment of a manure sampler for use in the invention

The device shown in Figure 1—3 comprises a box-shaped container or reaction vessel 1, which may be gas-tightly closed with a lid 2. To the lid a manometer, such as a spring manometer 3, is fixed, the measuring aperture of which opens on the inner side of the lid. A splash shield 4 for the manometer measuring aperture is attached to the lid. The lid 2 has downwardly projecting edges 5, which, when the lid is mounted, extend downwards over the top of the container 1 and fixes the lid against lateral displacements. A gasket 6 of an oxidation resistent material, e.g. EPDM, Teflon® or the like, is arranged in the lid 2 along the lateral edges thereof. Optionally the gasket 6 may extend over the whole inside of the lid with the exception of the manometer lead-through and the splash shield 4. The lid 2 is clamped to the container 1 by means of, on one hand, two bracket means 7 at either end of one side edge of the lid, which grasp corresponding tap members or supports 8 fixed to the upper part of the container 1, and, on the other hand, a hook means 9 on the opposite side edge of the lid and arranged to receive the bracket member 10 of a conventional clamp locking device 11. The locking or clamping force can in conventional manner be adjusted by the bracket member 10 being screwably arranged in a horizontal, rotatably journalled axis 12 of the clamp locking device. The manometer 3 is preferably, as is shown in the Figures, attached by screwing in a threaded lead-through 12 of the lid 2 and optionally fixed by a nut 13 to permit easy replacement of the manometer.

An internal trough-shaped container 14 for oxidizing agent is disposed within the container 1 and supported on a horizontal axis 15 through mounting braces 16. The axis 15 is rotatably journalled in a gas-tight bushing or lead-through 17 in one sidewall of the container 1 and may be operated by means of an operating arm 18 attached to the axis 15 on the outside of the container 1. The gas-tight bushing 17 may, as shown in Figure 1, consist of an externally threaded cylinder part 19 fixed in the container wall and provided with a central bore for the axis 15. A cap nut 20, screwn on the cylinder part 19, presses a gas-tight, oxidation resistant sealing 21, e.g. one or more Teflon® rings, against the axis 15 and the cylinder part 19.

The trough or oxidizing agent container 14 may, due to the above described arrangement, be pivoted from first position, or filling position, shown in Figure 1 and 2, where the trough 14 has its opening facing upwards and preferably rests with one side edge through against the adjacent side wall of the container 1 to prevent oxidizing agent from being spilled into the container 1 during the charging thereof. The size of the trough 14 is adapted such that it can hold an excess of oxidizing agent in relation to the amount of manure sample to be introduced into the container, as will be further explained below. By turning the operating arm 18 in counter clockwise direction the trough 14 can be pivoted to a lower position, shown in Figure 3, where the trough has its opening facing downwards. Although in Figure 3 the trough 14 is shown with the opening facing the bottom of the container 1, the trough may be pivoted as far as to the end position shown with broken lines, where the side edge of the trough goes against the container side wall. In order that the projecting portion of the manometer 3 on the inner side of the lid 2 should not prevent the pivoting movement of the trough 14 within the container, the manometer is disposed at a sufficient distance from the trough at one end of the lid. Due to the cooperating locking members 7, 8 of the lid 2 and the container 1, respectively, the lid can not be fixed in an incorrect position preventing the pivoting movement of the trough. For reasons which will appear below, the lower edge of the oxidizing agent container 14 should, in the lower part of the pivoting path shown in Figure 3, be relatively close to the bottom.

A suitable material for the container is, for example, stainless steel, but other oxidation resistant materials, such as suitable plastic materials, may also be used. As mentioned above an overpressure of about 100 kPa (one atmosphere) is a suitable overpressure to operate with and does not put any extreme requirements upon the strength of the measuring apparatus. The apparatus may optionally be provided with a safety valve, but the conventionally arranged bursting opening would be sufficient to prevent accidents, if the pressure rise in the apparatus for any reason should become too great during the measurement.

To analyse the nitrogen content of, for example, liquid manure one may proceed in the following manner. As mentioned above the sampling should take place in direct connection to the spreading of the farmyard manure, the latter being homogenized through agitation. Suitably, a larger sample is taken from the agitated manure basin by means of a bucket or the like. From the bucket a predetermined quantity of manure sample is then taken by means of a special sampler, e.g. designed as the sampler 22 in Figure 5. The sampler shown therein consists of a cylindric container 23 having a handle 24. The container 23 should be relatively high and thin to provide good accuracy for the sample volume withdrawn. To sample the sampler is introduced into the bucket with liquid manure (alternatively directly into the manure basin), so that the container 22 is filled to the brim. After the lid 2 has been removed from the measuring apparatus and the oxidizing agent container 14 being in the upper position (Figure 2), the manure sample is poured into the container 1. Oxidizing agent, e.g., chlorinated lime, is then filled into the trough 14. The oxidizing agent should be added in excess in relation to the estimated maximum ammonium nitrogen and urea nitrogen amount of the manure sample and may be dosed with a similar sampler as the manure sampler of Figure 5, or alternatively filled to a suitable marking in the trough 14. Since the nitrogen content varies substantially between various types of liquid manure, various sizes of the fillers for manure sample and oxidizing agent, respectively, are suitably used. For example, liquid manure from swine and cow usually contain about 5—6 kg N/m$^3$, poultry manure up to about 40 kg N/m$^3$ and digested sludge about 0,5—1 kg N/m$^3$. An excess of oxidizing agent of 15—20% may be suitable. For a reaction vessel volume of about 1,4 liters a suitable sample amount of swine/cow manure is about 200 cm$^3$ and a corresponding suitable addition of chlorinated lime about 50 cm$^3$. This gives an approximate overpressure of about 100 kPa in the subsequent reaction. After charging the oxidizing agent the lid is attached and clamped by means of the clamp locking device 11. The operating arm 18 is then brought in counter clockwise direction (in the direction of the arrow) to the position shown in Figure 3, whereby all the oxidizing agent in the trough 14 is emplited into the manure sample on the bottom of the container. Thereafter the operating arm 18 is moved forwards and backwards in the lower position thereof, the inverted trough 14 functioning as an agitator so that the mixture is stirred properly. The splash shield 4 prevents splashes from the mixture from entering into the manometer opening. After about 1 minute the reaction is completed, and the pressure rise obtained is read on the manometer scale 25. The latter is suitably graduated directly in, for example, kilograms N/m$^3$, the scale being directly dependent of the size of the manure sample container. It may be convenient to have three parallel scales on the manometer corresponding to three size of manure sample fillers, e.g., the following scales of 0—4 kg N/m$^3$, 0—10 kg N/m$^3$ and 0—40 kg N/m$^3$.

In the above described manner an analysis of the contents of ammonium nitrogen and urea nitrogen in a manure sample is thus quickly and conveniently carried out. While the measuring apparatus of the invention is particularly suitable for the determination of nitrogen in liquid manure and digested sludge, it may, as mentioned above, also be used for analyzing liquid manure of higher dry matter content and solid manure, compost, top-soil, etc.

In Figure 4 another embodiment of the measuring apparatus of the invention is shown, which is somewhat simpler to manufacture than the measuring apparatus of Figure 1—3. The container 1 in Figure 1—3 is here corresponded by a cylindric container 26, and the lid 2 by a lid 27, in the centre of which the manometer 3 is disposed. The lid is clamped with a number, in the shown case three, of clamp locking devices 11, whose bracket members 10 engage recesses 28 in the edge of the lid. In the same way as in the previous embodiment an oxidation resistant gasket 6 extends at least along the contact edge of the lid 27 with the container 26. Also in this case a splash shield 4 is arranged in front of the measuring opening of the manometer 3. The oxidizing agent container consists of a cylindrical container 29 attached to a horizontal pivot arm 30, which is rotatably journalled in two projections, e.g. tube taps 31 fixed to the inner wall of the container 26. The oxidizing agent container 29 is suspended to be capable of occupying a semi-stable upper position (as is shown in the Figure with solid lines), in which the upper part of the container 29 rests against the inner wall of the reaction vessel 26. Since the pivot axle 30 is freely journalled in the tube taps 31 the container 29 can be brought

to pivot down to the position shown in dashed lines by merely tilting the apparatus.

Manure analysis is performed essentially in the same way as described above in connection with the embodiment of Figure 1—3. Thus, a predetermined quantity of the manure sample is introduced into the container 26 with a sampler or filler 22 (Figure 5), a suitable amount of oxidizing agent (excess) is charged and the lid 27 is clamped. Then the apparatus is tilted so that the oxidizing agent container pivots downwards and the contents thereof are emptied over the manure sample. Optionally the outside of the container 26 may be provided with supports to allow the apparatus to be left in a tilted position. The measuring apparatus is then carefully shaken to mix the contents thereof. In the same way as above a reliable value of analysis for the nitrogen content can be read on the manometer scale 25 after about one minute.

As appears from the above the described measuring devices according to the invention are robust, safe to use and may be manufactured at a relatively low cost. An essential advantage is also that they are very simple to clean.

The method and the device of the invention are, of course, not restricted to the above described and specifically shown embodiments, but many variations and modifications may be made within the scope of the general inventive concept as it appears from the subsequent claims.

While a conventional spring manometer is a suitable pressure gauge, other pressure measuring devices may also be used. As mentioned above means for thermostatting the reaction vessel may optionally be provided. Further, the operating means (18) in Figure 1 must not necessarily be mechanically connected to the oxidizing agent container, but actuation of the latter may also take place through magnetic action.

**Claims**

1. A method of determining the nitrogen content of ammonium and urea containing materials such as manure, digested sludge, compost and soil, wherein a predetermined sample quantity of said material and an excess of an agent capable of oxidizing ammonium and urea nitrogen into nitrogen gas are contacted in a gas-tightly sealed container (1; 26) and the amount of nitrogen gas evolution caused by reaction of the material sample with the oxidizing agent is measured, said amount being directly related to the amount of ammonium and urea nitrogen of the material sample, characterized in that said oxidizing agent is selected from sodium hypochlorite, potassium hypochlorite, calcium hypochlorite, chlorinated lime and mixtures thereof, and that said amount of evolved gas is measured by a gas pressure measuring device (3) as a pressure rise within said container (1; 26) said oxidizing agent and said sample being introduced separately into the container (1; 26) and, after sealing of the container (1; 26), being brought into contact with each other by external operation of the container (1; 26).

2. The method of claim 1, characterized in that the temperature is kept substantially constant during the reaction.

3. A device for determining the nitrogen content of ammonium and urea containing materials, such as manure, digested sludge, compost and soil, comprising a gas-tightly sealable first container (1; 26) having at least one opening for the introduction of a material sample and an oxidizing agent, and a pressure measuring device (3) for measuring the pressure in the container (1; 26), said container (1; 26) comprising at least partially separated or separable spaces (1; 14; 26; 29) for the material sample and oxidizing agent, respectively, arranged to be capable of keeping the two substances separated, but through operation of the sealed container (1; 26) from the outside thereof permit mixing of the substances with each other, characterized in that said space for the oxidizing agent is a second container (14; 29) which is rotatably journalled in said first container (1; 26) between a first position, where the oxidizing agent is retained therein, and a second position, where the oxidizing agent is emptied into said first container (1; 26).

4. The device of claim 3, characterized in that the container (1; 26) comprises a gas-tightly attachable lid (2; 27), to which the pressure measuring device (3) is fixed.

5. The device of claim 3 or 4, characterized in that the oxidizing agent container (14) is actuable from the outside of said first container (1) through operating means (18) arranged on the outer wall of the container.

6. The device of claim 5, characterized in that said operating means (18) are mechanically connected to the oxidizing agent container (14) through a gas-tight lead-through means (19, 20, 21) in the container wall.

7. The device of any one of claims 3—6, characterized in that it comprises agitating means (14).

8. The device of claim 7, characterized in that the oxidizing agent container (14) also is capable of operating as said agitating means.

9. The device of any one of claims 3—8, characterized in that the pressure measuring device (3) is a spring manometer.

**Revendications**

1. Procédé permettant de déterminer la teneur en azote de matériaux contenant de l'ammonium et de l'urée, comme du fumier, de la boue digérée, du compost et du sol, selon lequel on met en contact un échantillon de quantité prédéterminée de cette matière avec un excès d'un agent capable d'oxyder l'azote de l'urée et de l'ammonium en azote gazeux dans un récipient fermé étanche aux gaz (1; 26) et l'on mesure la quantité d'azote gazeux dégagée à la suite de la réaction de l'échantillon de matière avec l'agent oxydant, cette quantité étant directement reliée à

la quantité d'azote d'ammonium et d'urée de l'échantillon, caractérisé en ce que l'agent oxydant est choisi parmi l'hypochlorite de sodium, l'hypochlorite de potassium, l'hypochlorite de calcium, la chaux chlorée et leurs mélanges et que la quantité de gaz dégagée est mesurée à l'aide d'un dispositif mesurant la pression gazeuse (3) en tant qu'élévation de pression à l'intérieur du récipient (1; 26), cet agent oxydant et cet échantillon étant introduits séparément dans le récipient (1; 26) et, après fermeture hermétique du récipient (1; 26) mis en contact l'un avec l'autre par une opération commandée de l'extérieur du récipient (1; 26).

2. Procédé suivant la revendication 1, caractérisé en ce que la température est maintenue pratiquement constante pendant la réaction.

3. Dispositif permettant de déterminer la teneur en azote de matières contenant de l'ammonium ou de l'urée, comme du fumier, de la boue digérée, du compost et du sol, comprenant un premier récipient (1; 26) pouvant être fermé de façon étanche aux gaz, pourvu d'au monis une ouverture pour l'introduction d'un échantillon de matière et d'un agent oxydant, et un dispositif mesurant la pression (3) pour mesurer la pression dans le récipient (1; 26), ce récipient (1; 26) comprenant des espaces séparables ou au moins partiellement séparés (1; 14; 26; 29) pour l'échantillon de matière et l'agent oxydant respectivement, disposés de façon à pouvoir maintenir séparées les deux substances, mais qui, par une mise en action du récipient fermé (1; 26) commandée de l'extérieur, permettent le mélange des deux substances, caractérisé en ce que l'espace prévu pour l'agent oxydant est un second récipient (14; 29) qui peut être déplacé par rotation dans le premier récipient (1; 26) entre une première position, dans laquelle l'agent oxydant est retenu à l'intérieur et une seconde position, dans laquelle l'agent oxydant est vidé dans le premier récipient (1; 26).

4. Dispositif suivant la revendication 3, caractérisé en ce que le récipient (1; 26) comprend un couvercle pouvant être fixé de façon étanche aux gaz (2; 27), auquel est fixé le dispositif mesurant la pression (3).

5. Dispositif suivant la revendication 3 ou 4, caractérisé en ce que l'on peut commander le récipient (14) d'agent oxydant depuis l'extérieur du premier récipient (1) par des moyens (18) disposés sur la paroi extérieure du récipient.

6. Dispositif suivant la revendication 5, caractérisé en ce que ces moyens de fonctionnement (18) sont reliés mécaniquement au récipient (14) d'agent oxydant, par l'intermédiaire de moyens de transmission étanches aux gaz (19, 20, 21) placés dans la paroi du récipient.

7. Dispositif suivant l'une quelconque des revendications 3 à 6, caractérisé en ce qu'il comprend des moyens d'agitation (4).

8. Dispositif suivant la revendication 7, caractérisé en ce que le récipient (14) d'agent oxydant est aussi capable de fonctionner en tant qu'agitateur.

9. Dispositif suivant l'une quelconque des revendications 3 à 8, caractérisé en ce que le dispositif (3) mesurant la pression est un manomètre à ressort.

**Patentansprüche**

1. Verfahren zum Bestimmen des Stickstoffgehalts von ammonium- und harnstoffhaltigen Materialien, wie Dünger, aufgeschlossener Schlamm, Kompost und Erde, worin eine vorbestimmte Probenmenge des Materials und ein Überschuß eines Mittels, das in der Lage ist, Ammonium und Harnstoffstickstoff zu Stickstoffgas zu oxidieren, in einem gasdicht abgedichteten Behälter (1; 26) kontaktiert werden, und die Menge der Stickstoffgasentwicklung, die durch Reaktion der Materialprobe mit dem oxidierenden Mittel be wirkt wird, gemessen wird, wobei diese Menge in direkter Beziehung zu der Menge an Ammonium und Harnstoffstickstoff der Materialprobe steht, dadurch gekennzeichnet, daß das oxidierende Mittel von Natriumhypochlorit, Kaliumhypochlorit, Calciumhypochlorit, Chlorkalk und Mischungen hiervon ausgewählt ist, und daß die Menge von entwickeltem Gas Mittels einer Gasdruckmeßeinrichtung (3) als ein Druckanstieg innerhalb des Behälters (1; 26) gemessen wird, wobei das oxidierende Mittel und die Probe gesondert in den Behälter (1; 26) eingebracht und nach Abdichten des Behälters (1; 26) durch externe Betätigung des Behälters (1; 26) in Kontakt miteinander gebracht werden.

2. Verfahren nach Anspruch 1, dadurch gekennzeichnet, daß die Temperatur während der Reaktion im wesentlichen konstant gehalten wird.

3. Einrichtung zum Bestimmen des Stickstoffgehalts von ammonium- und harnhaltigen Materialien, wie Dünger, aufgeschlossener Schlamm, Kompost und Erde, umfassend einen gasdicht abdichtbaren ersten Behälter (1; 26), der wenigstens eine Öffnung zum Einbringen einer Materialprobe und eines oxidierenden Mittels hat, und eine Druckmeßeinrichtung (3) zum Messen des Drucks in dem Behälter (1; 26), wobei der Behälter (1; 26) wenigstens teilweise getrennte oder trennbare Räume (1; 14; 26; 29) für die Materialprobe bzw. das oxidierende Mittel umfaßt, die so angeordnet sind, daß sie in der Lage sind, die beiden Substanzen getrennt zu halten, jedoch durch Betätigung des abgedichteten Behälters (1; 26) vom Äußeren desselben her ein Mischen der Substanzen miteinander gestatten, dadurch gekennzeichnet, daß der Raum für das oxidierende Mittel ein zweiter Behälter (14; 29) ist, der in dem ersten Behälter (1; 26) drehbar zwischen einer ersten Position, in welcher das oxidierende Mittel darin zurückgehalten wird, und einer zweiten Position, in welcher das oxidierende Mittel in den ersten Behälter (1; 26) geleert wird, gelagert ist.

4. Einrichtung nach Anspruch 3, dadurch gekennzeichnet, daß der Behälter (1 26) einen

gasdicht anbringbaren Deckel (2; 27) umfaßt, an dem die Druckmeßeinrichtung (3) befestigt ist.

5. Einrichtung nach Anspruch 3 oder 4, dadurch gekennzeichnet, daß der Oxidationsmittelbehälter (14) von der Außenseite des ersten Behälters (1) her durch eine Betätigungseinrichtung (18), die auf der Außenwand des Behälters angeordnet ist, betätigbar ist.

6. Einrichtung nach Anspruch 5, dadurch gekennzeichnet, daß die Betätigungseinrichtung (18) mechanisch mit dem Oxidationsmittelbehälter (14) durch eine gasdichte Durchleitungseinrichtung (19, 20, 21) in der Behälterwand verbunden ist.

7. Einrichtung nach einem der Ansprüche 3 bis 6, dadurch gekennzeichnet, daß sie eine Rühreinrichtung (14) umfaßt.

8. Einrichtung nach Anspruch 7, dadurch gekennzeichnet, daß der Oxidationsmittelbehälter (14) außerdem in der Lage ist, als die Rühreinrichtung zu arbeiten.

9. Einrichtung nach einem der Ansprüche 3 bis 8, dadurch gekennzeichnet, daß die Druckmeßeinrichtung (3) ein Federmanometer ist.

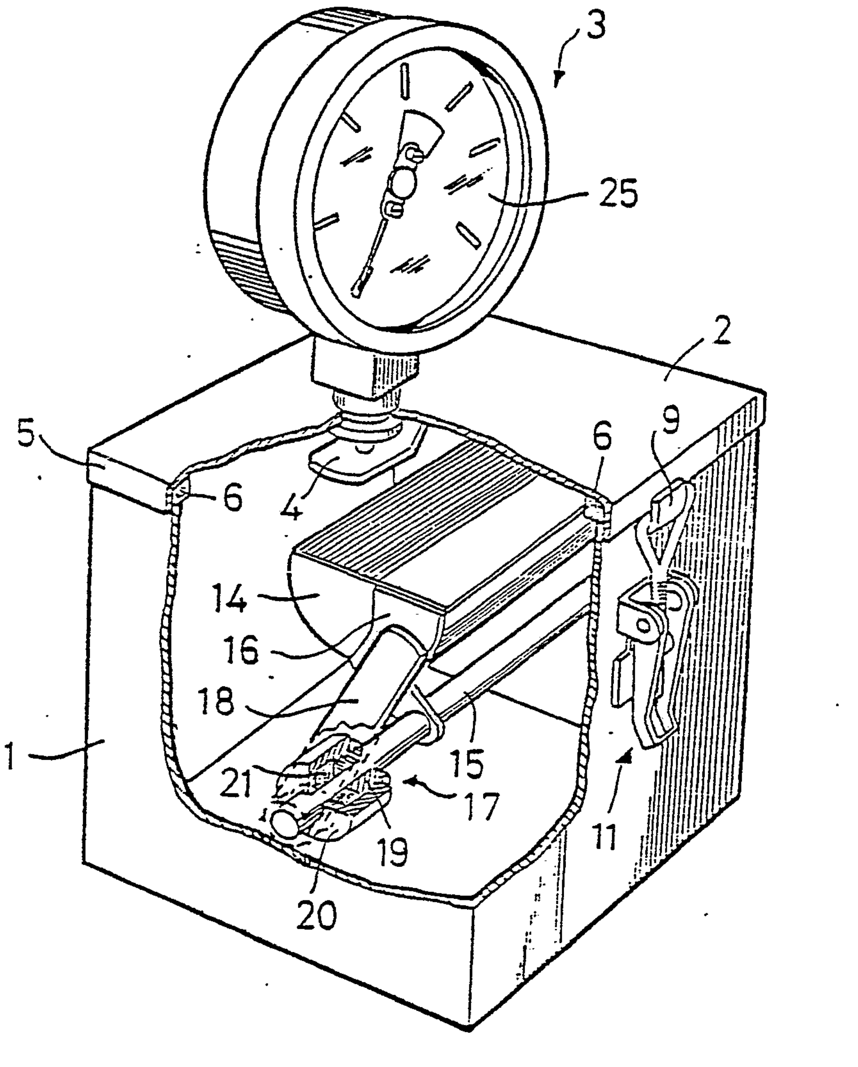


FIG. 1

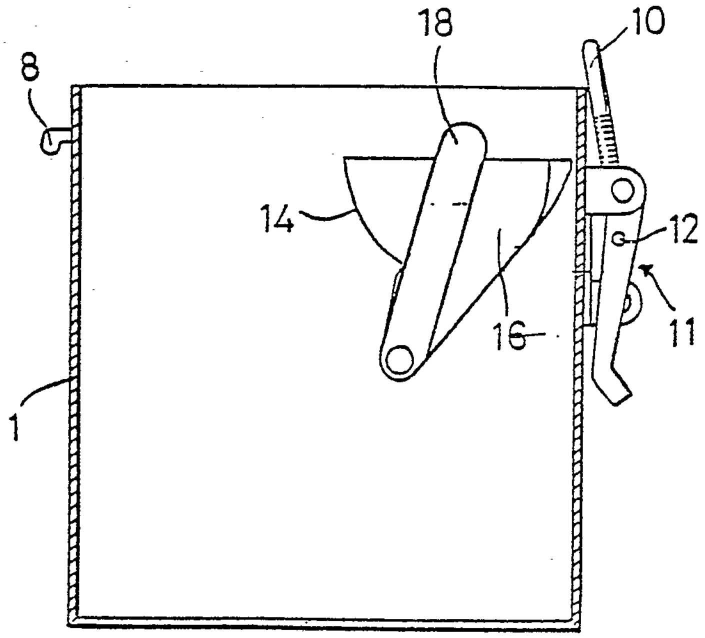


FIG. 2

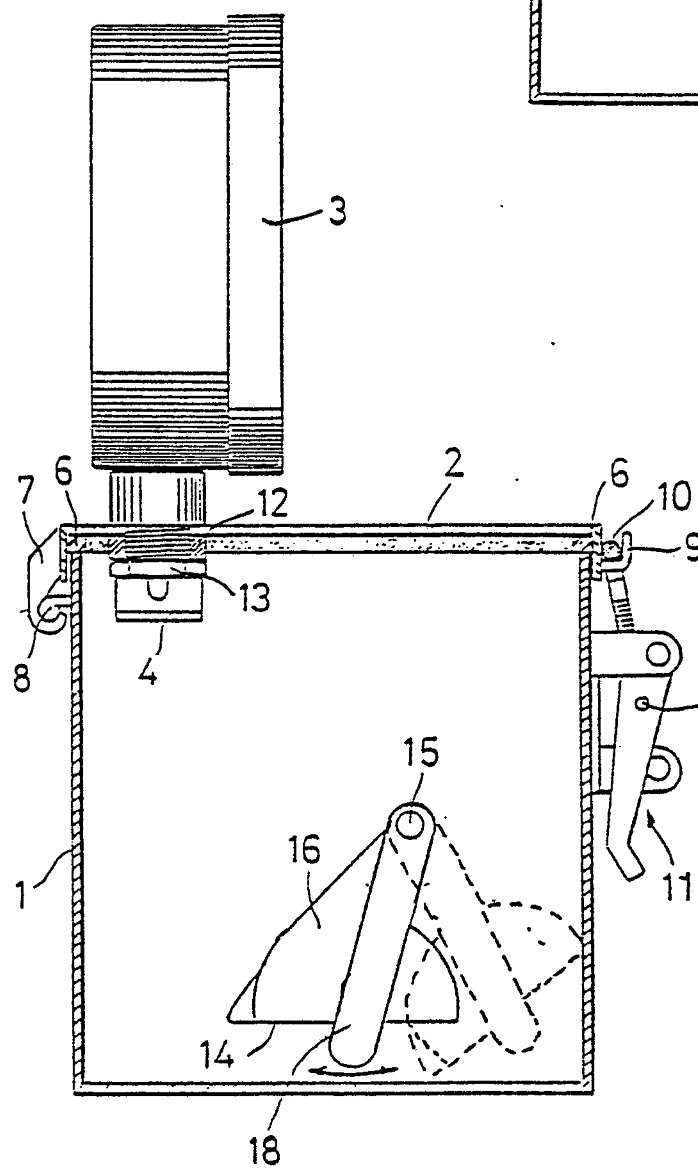


FIG. 3

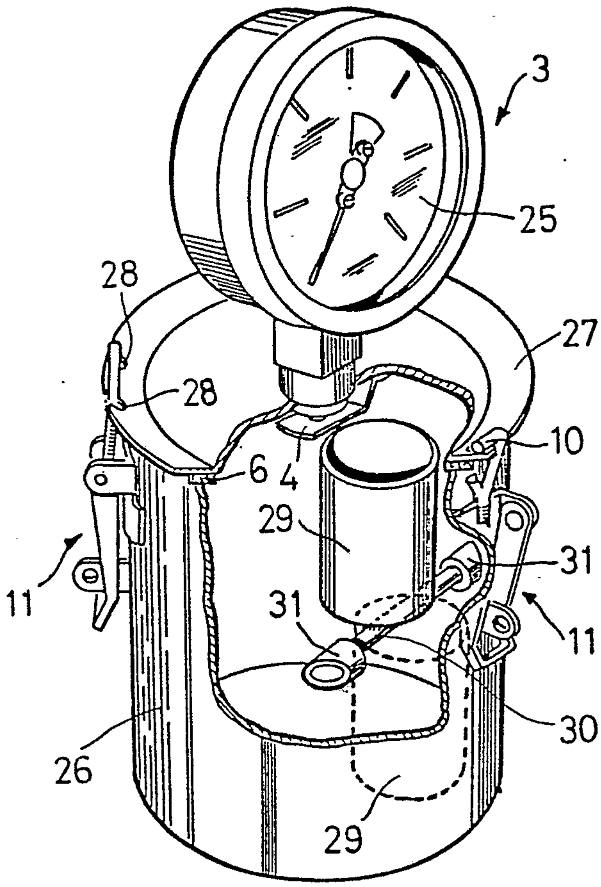


FIG. 4

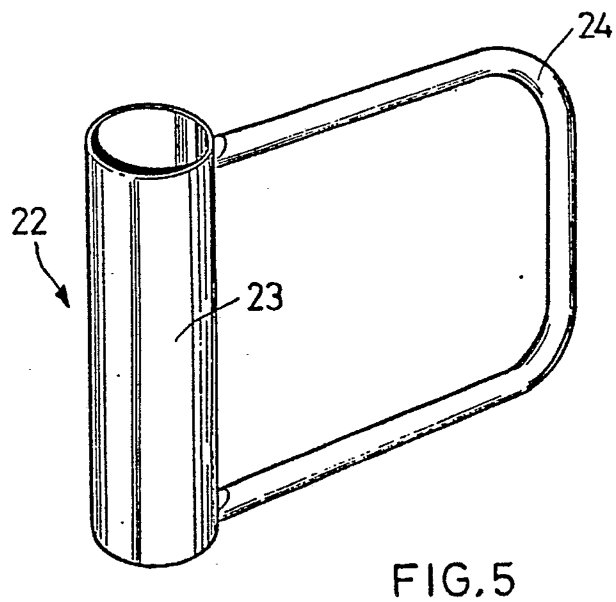


FIG. 5